# EUROPEAN PATENT SPECIFICATION

(11) **EP 2 029 415 B1**
(45) Date of publication and mention of the grant of the patent: **15.02.2012**
(21) Application number: 07729386.8
(22) Date of filing: 22.05.2007
(51) Int. Cl.: B62D 13/04

(54) **STEERING TRAILER OR SEMI-TRAILER**
LENKBARER ANHÄNGER ODER SATTELANHÄNGER
REMORQUE DIRECTRICE OU SEMI-REMORQUE

(30) Priority: 29.05.2006 IT PD20060213
(43) Date of publication of application: 04.03.2009
(73) Proprietor: SANSAVINI TRAILER S.r.l., 25030 Torbole Casaglia (IT)
(72) Inventor: BERTOZZI SANSAVINI, Fabrizio, I-25030 Lograto (IT)
(74) Representative: Montevecchi, Emma
(86) International application number: PCT/EP2007/054947
(87) International publication number: WO 2007/137970

(56) References cited:
- EP-A- 0 390 288
- EP-A- 1 048 550
- DE-A1- 10 222 309
- FR-A1- 2 828 532
- FR-A1- 2 859 440
- NL-A- 7 612 980
- SU-A1- 1 664 643
- US-A- 5 244 226
- US-A- 5 634 389

## Description

### Technical field

The present invention relates to a steering trailer or semi-trailer of the type provided with a device for detecting the angle of displacement between a tractor, understood as a motor-driven towing vehicle, when it is being steered, and the trailer or semi-trailer in order to control the corresponding steering of at least one steering axle of the trailer or semi-trailer, this axle having opposing steering hubs which are interconnected with one another and at least one of which is subject to a steering actuator.

### Technological background

Axles of this type are disclosed, for instance, in WO 09515273.

NL 7 612 980 A discloses a steering trailer according to the preamble of claim 1.

### Description of the invention

The purpose of the invention is to improve the system which governs the steering of these trailers or semi-trailers while at the same time making steering more efficient and improving safety.

This result is achieved with a trailer or semi-trailer according to the accompanying claims.

### Brief description of the drawings

The characteristic features and advantages of the invention are set out in further detail in the following detailed description of a preferred embodiment thereof, shown by way of non-limiting example in the accompanying drawings, in which:
Fig. 1 is a partial schematic plan view of a trailer or semi-trailer according to the present invention when travelling in a rectilinear manner;
Figs. 2 and 3 are corresponding views of the same trailer or semi-trailer in opposite steering phases.

### Preferred embodiments of the invention

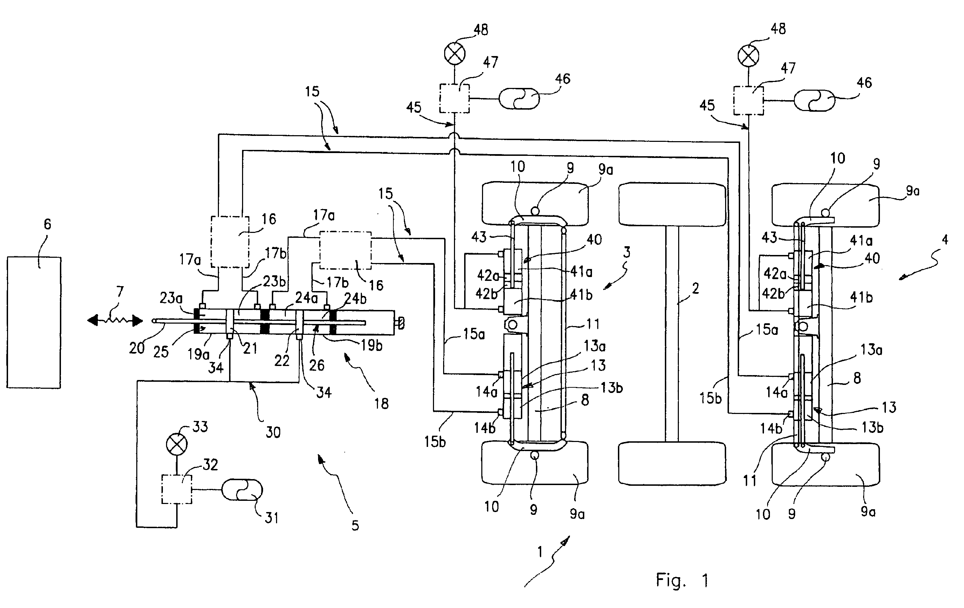

In the drawings, the distribution scheme of the axles of a trailer or semi-trailer of the invention is shown overall by 1. Reference is made, in Fig. 1, to a condition of rectilinear travel. The trailer or semi-trailer 1 is provided with a fixed axle 2 and two steering axles 3, 4 which are functionally identical.

The trailer or semi-trailer 1 is provided with a device 5 for detecting the angular displacement of a tractor or like motor-driven towing vehicle 6, when it is being steered, with respect to a longitudinal median line 7 of the trailer or semi-trailer. The mechanics of the connection between the tractor and the trailer or semi-trailer 1 and the relative connection with the detection device 5 are not shown as they are not part of the subject matter of the present invention. The connection between the tractor 6 and the detection device 5 is such as to enable corresponding steering of the axles 3, 4 to be controlled when a misalignment between the tractor and the trailer or semi-trailer 1 is detected.

Each steering axle 3, 4 comprises a beam 8 on whose opposing longitudinal ends a joint 9 bearing a respective wheel 9a with a relative hub and a steering arm 10 is articulated. The steering arms of the same axle are interconnected with one another by means of a coupling rod 11.

A steering actuator with a hydraulic cylinder 13 of the dual-acting type with a double chamber 13a, b, each of which is interconnected by a respective connection mouth 14a, b to respective tubes 15a, b of a transfer circuit shown overall by 15, is interposed in the steering axles 3, 4 between one of the steering arms 10 and the beam 8.

Each transfer circuit 15 comprises a dual maximum pressure valve 16 of the cross-flow type from which further tubes 17a, b extend and connect the actuator cylinder 13 to a hydraulic control actuator 18. The actuator 18 is of the type with a double tray 19a, b and a single rod 20 on which two pistons 21, 22 are mounted and each bound, in their own tray portion 19a, b, a dual-acting hydraulic cylinder 25, 26 with a double chamber 23a, b and 24a, b respectively. In practice, the actuator 18 comprises two hydraulically separate hydraulic control cylinders whose pistons 21, 22 are mechanically connected by the common rod 20. All the mutually interconnected chambers 13a, b, 23a, b and 24a, b have an identical overall working volume (i.e. the chambers have an equal volume when the piston separating them is in a central position) and are interconnected so that corresponding chambers are in mutual hydraulic connection via the transfer circuit 15 for the fluid pumped by a chamber of the control cylinder to a corresponding chamber of the actuator cylinder and vice versa, according to the scheme of Fig. 1.

The detection device 5 comprises, in addition to the control cylinders 25, 26, a pressurisation circuit shown overall by 30 which is adapted to maintain a predetermined constant pressure in the transfer circuit 15 relating to each pair formed by a control cylinder 25, 26 and actuator 13.

The pressurisation circuit 30 comprises a hydro-pneumatic accumulator 31 preloaded to a predetermined pressure and an integrated low-pressure valve 32 which is normally open with a pre-calibrated minimum operating pressure. The integrated valve 32 is provided with a pressostatic low-pressure alarm 33 adapted to signal any pressure drops in the circuit 30 below the pre-calibrated minimum operating pressure. The pressurisation circuit 30 is connected to the transfer circuits 15 by means of the central mouth 34 on each control cylinder 25, 26.

In the case of rectilinear travel by the trailer or semi-trailer, as shown in Fig. 1, the pistons 21, 22 are positioned at the respective mouths 34 which, as their diameter is greater than the dimensions of the piston, allow the pressurisation circuit 30 to communicate with both chambers 23a, b and 24a, b respectively of the respective control cylinders 25, 26. The pre-loading pressure of the hydro-pneumatic accumulator is thus distributed identically with respect to both the control cylinder and the steering actuator cylinders ensuring that all the pistons are centred and any oil losses due to leakages are compensated.

A hydraulic safety cylinder 40 of the dual-acting type with a double chamber 41a, b is lastly provided for each steering axle; the cylinder 40 acts on a hub of the steering axle 3, 4 in opposition to the corresponding actuator cylinder 13.

Each safety cylinder 40 comprises a pair of pistons 42a, b sliding in a limited manner in the respective tray between a central stop position and a respective and opposing end stop position. The pistons 42a, b are rigid in translation with a same rod 43 in the direction of sliding from the central stop position to the end stop position and free in relation to this rod in the opposite direction.

Each safety cylinder is connected to a pressurisation circuit 45, although the operating pressure in two or a plurality of safety cylinders may be maintained by a single pressurisation circuit. In a similar manner to the pressurisation circuit 30, the circuits 45 comprise a hydro-pneumatic accumulator 46 pre-loaded to a predetermined pressure and an integrated low-pressure valve 47 which is normally open with a pre-calibrated minimum operating pressure. The integrated valve 47 is provided with a low-pressure pressostatic alarm 48 adapted to indicate any pressure drops in the circuit 45 below the pre-calibrated minimum operating pressure.

With reference to the above structural description, the operation of the trailer or semi-trailer is as follows.

From the condition of rectilinear travel of the tractor or like towing vehicle and the trailer or semi-trailer shown in Fig. 1, i.e. when they are not misaligned, the rod of the control cylinders 20 is positioned such that the respective pistons 21, 22 are in a centred position with respect to the mouth 34 and therefore the chambers 23a, b and 24a, b are equally pressurised to the maintenance pressure established by the accumulator 31 of the pressurisation circuit 30. Both pistons 42a, b of the safety cylinder 40 are locked close to the central stop.

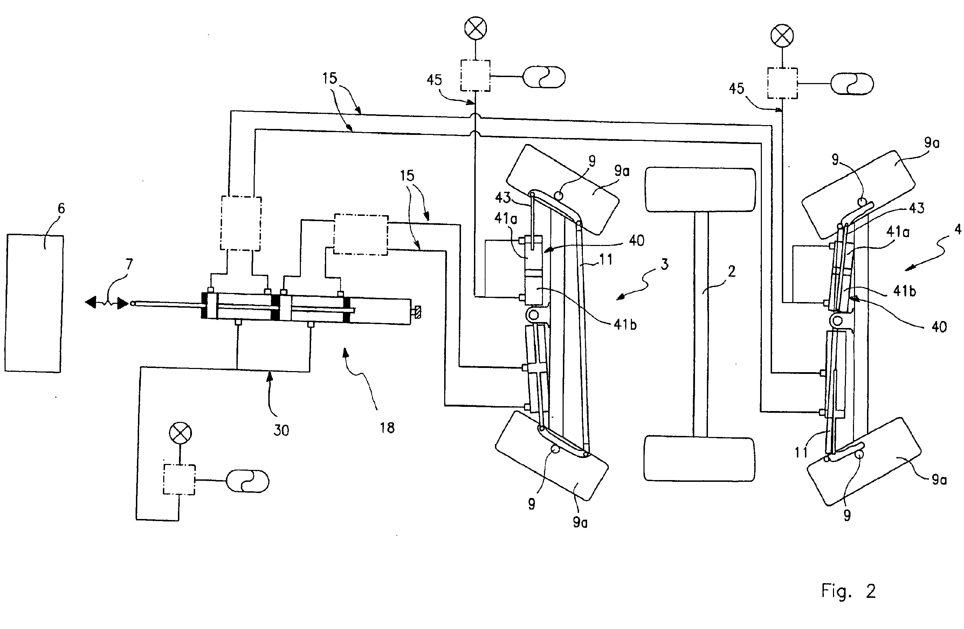

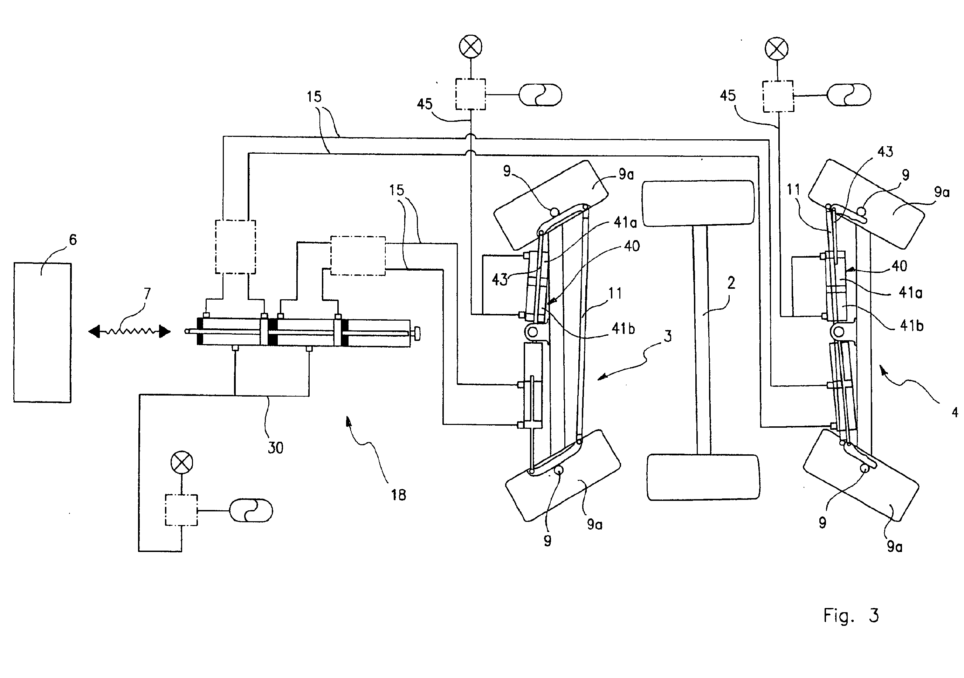

Moving from this position to a position of steering to the right (Fig. 2) or to the left (Fig. 3), the control cylinders 25, 26 making up the control actuator 18 are actuated together with the rod 20 in order to pump oil from one their chambers (23a and 24a in the case of steering to the right, 23b and 24b in the case of steering to the left) and to recall oil into the remaining chambers (23b and 24b in the case of steering to the right, 23a and 24a in the case of steering to the left).

The pumping and recall action produces a corresponding intake and discharge of oil from the steering cylinders 13 with a resulting displacement of the respective pistons and actuation of the joint spindles which cause the steering of the corresponding axle 3, 4.

In a manner known per se, the steering action on a wheel is transmitted to the other wheel through the action of the coupling rod 11.

The function of the maximum pressure valve 16 at this stage is to limit the pressure in the transfer circuit to a maximum value when, for instance, steering of one of the wheels is prevented because it is, for instance, alongside a kerb. In this case, the pressurised fluid is bypassed by the delivery duct to the return duct without supplying the steering cylinder.

During the steering phase, the median openings of each control cylinder 25, 26 continue to be connected to the pressurisation circuit 30 and the relative hydro-pneumatic accumulator, maintaining a constant predetermined pressure in the corresponding transfer circuit 15.

In relation to the safety cylinder 40, in the phase of rectilinear travel the pressurised fluid of the pressurisation circuit 45 forces the two pistons 42a, b to bear to the rear of the central stop thereby locking the rod 43. Steering of the wheels is thus locked in the position of rectilinear travel.

During steering, the function of the safety cylinder is to oppose resistance to the oscillation of the joints, forcing the steering cylinders to overcome this resistance.

When the wheels - not of the trailer or semi-trailer - are being steered to the left as a result of the steering action of the steering cylinder, the steering arm 10 of the axle exerts a thrust on the rod 43 of the safety cylinder urging it to return to its relative tray. This thrust causes the displacement of the piston 42b and therefore the transfer of fluid from the chamber 41b to the hydro-pneumatic accumulator 46. The piston 42a, through which the rod 43 passes, thus remains locked in abutment against the central stop.

Vice versa, when the wheels are being steered to the right, the steering arm 10 of the axle exerts traction on the rod 43 of the safety cylinder thereby extracting it from its tray. This traction causes the displacement of the piston 42a and therefore the transfer of fluid from the chamber 41a to the hydro-pneumatic accumulator 46. The piston 42b, free from the rod, is thus moved into abutment against the central stop.

The advantages of the invention include the fact that, if the system malfunctions, the steering axles continue to be locked in the position of rectilinear travel as a result of the safety cylinders.

The inclusion of pressurisation circuits also enables ongoing compensation of any losses from the circuits.

The invention as described may be modified and varied in many ways without departing from the scope of the invention. For instance, a single pressurisation circuit may be coupled to one or more safety cylinders for a corresponding number of steering axles. The same system may also be adapted to a trailer or semi-trailer with a single steering axle or with a plurality of steering axles, in this case multiplying the number of control cylinders to correspond to the number of steering axles.

## Claims

1. A steering trailer or semi-trailer (1) of the type provided with a detection device (5) for detecting the angle of displacement between a motor-driven towing vehicle (6) which is being steered and the trailer or semi-trailer (1) in order to control the corresponding steering of at least two steering axles (3,4) of the trailer or semi-trailer (1), each of said axles (3,4) having opposing steering hub means interconnected with one another and subject to a steering actuator, **characterised in that** it comprises, for each steering axle (3,4), a hydraulic control cylinder (25,26) belonging to said detection device (5) and a hydraulic actuator cylinder (13) belonging to said steering actuator, said cylinders (13,25; 13,26) both being dual-acting and having a double chamber of identical overall working volume, and being interconnected with one another such that the corresponding chambers are in mutual hydraulic connection via a transfer circuit (15) for the fluid pumped from a chamber of the control cylinder (23a,b; 24a,b) to a corresponding chamber (13a,b) of the actuator cylinder and vice versa, said two hydraulic control cylinders (25,26) being-comprised in one hydraulic control actuator (18) and having two respective pistons (21, 22) which are mechanically connected by a common rod (20).

2. A steering trailer or semi-trailer according to claim 1, wherein said detection device (5) comprises a pressurisation device (30) for each control (25,26) and actuator cylinder (13) pair in order to maintain a constant predetermined pressure in the relative transfer circuit (15).

3. A steering trailer or semi-trailer according to claim 2, wherein said pressurisation device (30) comprises a hydro-pneumatic accumulator (31) pre-loaded to a predetermined pressure.

4. A steering trailer or semi-trailer according to claim 3, wherein said pressurisation device (30) comprises a low-pressure alarm (33).

5. A steering trailer or semi-trailer according to claim 3 or 4, wherein said hydro-pneumatic accumulator (31) is connected to the transfer circuit (15) by means of an integrated low-pressure valve (32) which is normally open with a pre-calibrated minimum operating pressure.

6. A steering trailer or semi-trailer according to claim 2 or following, wherein said pressurisation device (30) is connected to the respective control cylinder (25,26).

7. A steering trailer or semi-trailer according to claim 2 or following, wherein the pressurisation device (30) is connected to the respective control cylinder (25,26) in a position such that, when the control cylinder detects a misalignment between the motor-driven towing vehicle and the trailer or semi-trailer, said pressurisation device (30) is simultaneously connected to both chambers of the control cylinder (23a,b; 24a,b).

8. A steering trailer or semi-trailer according to one or more of the preceding claims, wherein the transfer circuit (15) comprises a cross-flow pressure limiting valve (16) so as to connect the chambers of the control cylinder (23a,b; 24a,b) when the pressure in the transfer circuit (15) exceeds a predetermined value.

9. A steering trailer or semi-trailer according to one or more of the preceding claims, wherein a hydraulic safety cylinder (40) of the dual-acting type with a double chamber (41a,b), acting on a hub of the steering axle (3,4) in opposition to the corresponding actuator cylinder (13), is provided.

10. A steering trailer or semi-trailer according to claim 9, wherein said safety cylinder (40) has a working volume corresponding to the working volume of the control (25,26) and actuator (13) cylinders of the same axle.

11. A steering trailer or semi-trailer according to claim 9 or 10, wherein a safety cylinder (40) is provided for each steering axle (3,4).

12. A steering trailer or semi-trailer according to any one of claims 9 to 11, wherein each safety cylinder (40) comprises a pressurisation device (45).

13. A steering trailer or semi-trailer according to claim 12, wherein said pressurisation device (45) comprises a hydro-pneumatic accumulator (46) pre-loaded to a predetermined pressure.

14. A steering trailer or semi-trailer according to claim 13, wherein said pressurisation device (45) comprises a low-pressure alarm.

15. A steering trailer or semi-trailer according to claim 14, wherein each safety cylinder (40) comprises a pair of pistons (42a,b) sliding in a limited manner in the respective tray between a central stop position and a respective and opposing end stop position, said pistons (42a,b) being rigid in translation with a same rod (43) in the direction of sliding from the central stop position to the end stop position and free in relation to said rod (43) in the opposite direction.

16. A steering trailer or semi-trailer according to one or more of the preceding claims, wherein the control cylinder (18) is of the single through-rod (20) and multiple tray (19a,b) type.

17. A steering trailer or semi-trailer according to claim 16, wherein the number of trays (19a,b) of the control cylinder corresponds to the number of steering axles (3,4).

## Patentansprüche

1. Ein lenkbarer Anhänger oder Sattelanhänger (1) von der Bauart, der mit einer Erfassungsvorrichtung (5) zum Erfassen des Winkels der Verschiebung zwischen einem motorgetriebenen Zugfahrzeug (6), das gelenkt wird, und dem Anhänger oder Sattelanhänger (1) versehen ist, um die entsprechende Lenkung von zumindest zwei Lenkachsen (3, 4) des Anhängers oder Sattelanhängers (1) zu steuern, wobei jede der Achsen (3, 4) gegenüberliegende Lenkmittelpunktsvorrichtungen aufweist, die miteinander verbunden sind und von einem Lenkaktuator abhängig sind, **dadurch gekennzeichnet, dass** die Vorrichtung für jede Lenkachse (3, 4) einen hydraulischen Steuerungszylinder (25, 26), der zur Erfassungsvorrichtung (5) gehört, und einen hydraulischen Aktuatorzylinder (13), der zum Lenkaktuator gehört, aufweist, wobei beide Zylinder (13, 25; 13, 26) sowohl doppeltwirkend sind als auch eine Doppelkammer mit identischem Gesamtarbeitsvolumen aufweisen und miteinander verbunden sind, so dass die jeweiligen Kammern gemeinsam über einen Transferkreis (15) für die Flüssigkeit, die von einer Kammer des Steuerungszylinders (23a, b; 24a,b) zu einer entsprechenden Kammer (13a,b) des Aktuatorzylinders und umgekehrt gepumpt wird, hydraulisch verbunden sind wobei die beiden hydraulischen Steuerungszylinder (25, 26) in einem hydraulischen Steuerungsaktuator (18) enthalten sind und jeweils zwei Kolben (21, 22) aufweisen, die mechanisch durch eine gemeinsame Stange (20) verbunden sind.

2. Ein lenkbarer Anhänger oder Sattelanhänger gemäß Anspruch 1, wobei die Erfassungsvorrichtung (5) eine Druckbeaufschlagungsvorrichtung (30) für jedes Steuerungszylinderpaar (25, 26) und Aktuatorzylinderpaar (13) aufweist, um einen konstanten vorbestimmten Druck im jeweiligen Transferkreis (15) aufrechtzuerhalten.

3. Lenkbarer Anhänger oder Sattelanhänger gemäß Anspruch 2, wobei die Druckbeaufschlagungsvorrichtung (30) einen hydro-pneumatischen Akkumulator (31), der mit einem vorbestimmten Druck vorab beaufschlagt ist, aufweist.

4. Lenkbarer Anhänger oder Sattelanhänger gemäß Anspruch 3, wobei die Druckbeaufschlagungsvorrichtung (30) einen Niederdruckalarm (33) aufweist.

5. Lenkbarer Anhänger oder Sattelanhänger gemäß Anspruch 3 oder 4, wobei der hydro-pneumatische Akkumulator (31) mit dem Transferkreis (15) mittels eines integrierten Niederdruckventils (32) verbunden ist, das bei einem vorkalibrierten minimalen Betriebsdruck normalerweise geöffnet ist.

6. Lenkbarer Anhänger oder Sattelanhänger gemäß einem der Ansprüche 2 bis 5, wobei die Druckbeaufschlagungsvorrichtung (30) mit dem jeweiligen Steuerungszylinder (25, 26) verbunden ist.

7. Lenkbarer Anhänger oder Sattelanhänger gemäß einem der Ansprüche 2 bis 6, wobei die Druckbeaufschlagungsvorrichtung (30) mit dem jeweiligen Steuerungszylinder (25, 26) in einer Position verbunden ist, so dass, wenn der Steuerungszylinder eine Fehlausrichtung zwischen dem motorgetriebenen Zugfahrzeug und dem Anhänger oder Sattelanhänger erfasst, die Druckbeaufschlagungsvorrichtung (30) gleichzeitig mit beiden Kammern des Steuerungszylinders (23a, b; 24a, b) verbunden ist.

8. Lenkbarer Anhänger oder Sattelanhänger gemäß einem der vorhergehenden Ansprüche, wobei der Transferkreis (15) ein Querstrom-Begrenzungsventil (16) aufweist, um somit die Kammern des Steuerungszylinders (23a, b; 24a, b) zu verbinden, wenn der Druck im Transferkreis (15) einen vorbestimmten Wert überschreitet.

9. Lenkbarer Anhänger oder Sattelanhänger gemäß einem der vorhergehenden Ansprüche, wobei ein hydraulischer Sicherheitszylinder (40) vom doppeltwirkenden Typ mit einer Doppelkammer (41a, b) vorgesehen ist, der auf einen Mittelpunkt der Lenkachse (3, 4) gegen den entsprechenden Aktuatorzylinder (13) wirkt.

10. Lenkbarer Anhänger oder Sattelanhänger gemäß Anspruch 9, wobei der Sicherheitszylinder (40) ein Betriebsvolumen gemäß dem Betriebsvolumen des Steuerungszylinders (25, 26) und Aktuatorzylinders (13) von derselben Achse aufweist.

11. Lenkbarer Anhänger oder Sattelanhänger gemäß Anspruch 9 oder 10, wobei ein Sicherheitszylinder (40) für jede Lenkachse (3, 4) vorgesehen ist.

12. Lenkbarer Anhänger oder Sattelanhänger gemäß einem der Ansprüche 9 bis 11, wobei jeder Sicherheitszylinder (40) eine Druckbeaufschlagungsvorrichtung (45) aufweist.

13. Lenkbarer Anhänger oder Sattelanhänger gemäß Anspruch 12, wobei die Druckbeaufschlagungsvorrichtung (45) einen hydropneumatischen Akkumulator (46) aufweist, der mit einem vorbestimmten Druck vorab beaufschlagt wird.

14. Lenkbarer Anhänger oder Sattelanhänger gemäß Anspruch 13, wobei die Druckbeaufschlagungsvorrichtung (45) einen Niederdruckalarm aufweist.

15. Lenkbarer Anhänger oder Sattelanhänger gemäß Anspruch 14, wobei jeder Sicherheitszylinder (40) ein Kolbenpaar (42a,b) aufweist, das in begrenzter Weise im jeweiligen Einsatz zwischen einer zentralen Anschlagsposition und einer jeweils gegenüberliegenden Endanschlagsposition gleitet, wobei die Kolben (42a, b) bei der Verschiebung mit derselben Stange (43) in Gleitrichtung von der zentralen Anschlagsposition bis zur Endanschlagsposition unbeweglich sind und bezüglich der Stange (43) in entgegengesetzter Richtung frei beweglich sind.

16. Lenkbarer Anhänger oder Sattelanhänger gemäß einem der vorhergehenden Ansprüche, wobei der Steuerungszylinder (18) ein einzelner durchgehender Stab (20) und ein Mehrfacheinsatztyp (19a, b) ist.

17. Lenkbarer Anhänger oder Sattelanhänger gemäß Anspruch 16, wobei die Anzahl der Einsätze (19a, b) des Steuerungszylinders der Anzahl der Lenkachsen (3, 4) entspricht.

## Revendications

1. Remorque ou semi-remorque directrice (1) du type doté d'un dispositif de détection (5) pour détecter l'angle de déplacement entre un véhicule tracteur à moteur (6) qui est dirigé et la remorque ou semi-remorque (1) afin de commander le braquage correspondant d'au moins deux essieux de direction (3, 4) de la remorque ou semi-remorque (1), chacun desdits essieux (3, 4) ayant des moyens de moyeu de direction opposés interconnectés entre eux et assujetti à un actionneur de direction, **caractérisée en ce qu'**elle comprend, pour chaque essieu de direction (3, 4), un vérin de commande hydraulique (25, 26) appartenant audit dispositif de détection (5) et un vérin actionneur hydraulique (13) appartenant audit actionneur de direction, lesdits vérins (13, 25 ; 13, 26) étant tous deux à double effet et ayant une double chambre de volume de travail global identique, et étant interconnectés entre eux de sorte que les chambres correspondantes sont en connexion hydraulique mutuelle via un circuit de transfert (15) pour le fluide pompé d'une chambre du vérin de commande (23a, b ; 24a, b) à une chambre correspondante (13a, b) du vérin actionneur et vice versa, lesdits deux vérins de commande hydrauliques (25, 26) étant compris dans un actionneur de commande hydraulique (18) et ayant deux pistons (21, 22) respectifs qui sont mécaniquement raccordés par une tige commune (20).

2. Remorque ou semi-remorque directrice selon la revendication 1, dans laquelle ledit dispositif de détection (5) comprend un dispositif de mise sous pression (30) pour chaque paire de vérins de commande (25, 26) et actionneur (13) afin de maintenir une pression prédéterminée constante dans le circuit de transfert (15) relatif.

3. Remorque ou semi-remorque directrice selon la revendication 2, dans laquelle ledit dispositif de mise sous pression (30) comprend un accumulateur hydropneumatique (31) pré-chargé à une pression prédéterminée.

4. Remorque ou semi-remorque directrice selon la revendication 3, dans laquelle ledit dispositif de mise sous pression (30) comprend une alarme de basse pression (33).

5. Remorque ou semi-remorque directrice selon la revendication 3 ou 4, dans laquelle ledit accumulateur hydropneumatique (31) est raccordé au circuit de transfert (15) au moyen d'une soupape basse pression intégrée (32) qui est normalement ouverte avec une pression de travail minimum pré-calibrée.

6. Remorque ou semi-remorque directrice selon la revendication 2 ou suivantes, dans laquelle ledit dispositif de mise sous pression (30) est raccordé au vérin de commande (25, 26) respectif.

7. Remorque ou semi-remorque directrice selon la revendication 2 ou suivantes, dans laquelle le dispositif de mise sous pression (30) est raccordé au vérin de commande (25, 26) respectif dans une position de sorte que, lorsque le vérin de commande détecte un défaut d'alignement entre le véhicule tracteur à moteur et la remorque ou semi-remorque, ledit dispositif de mise sous pression (30) est simultanément raccordé aux deux chambres du vérin de commande (23a, b ; 24a, b) .

8. Remorque ou semi-remorque directrice selon une ou plusieurs des revendications précédentes, dans laquelle le circuit de transfert (15) comprend une soupape de limitation de pression d'écoulements croisés (16) afin de raccorder les chambres du vérin de commande (23a, b ; 24a, b) lorsque la pression dans le circuit de transfert (15) dépasse une valeur prédéterminée.

9. Remorque ou semi-remorque directrice selon une ou plusieurs des revendications précédentes, dans laquelle on prévoit un vérin de sécurité hydraulique (40) du type à double effet avec une double chambre (41a, b), agissant sur un moyeu de l'essieu de direction (3, 4) en opposition au vérin actionneur (13) correspondant.

10. Remorque ou semi-remorque directrice selon la revendication 9, dans laquelle ledit vérin de sécurité (40) a un volume de travail correspondant au volume de travail des vérins de commande (25, 26) et actionneur (13) du même essieu.

11. Remorque ou semi-remorque directrice selon la revendication 9 ou 10, dans laquelle un vérin de sécurité (40) est prévu pour chaque essieu de direction (3, 4).

12. Remorque ou semi-remorque directrice selon l'une quelconque des revendications 9 à 11, dans laquelle chaque vérin de sécurité (40) comprend un dispositif de mise sous pression (45).

13. Remorque ou semi-remorque directrice selon la revendication 12, dans laquelle ledit dispositif de mise sous pression (45) comprend un accumulateur hydropneumatique (46) pré-chargé à une pression prédéterminée.

14. Remorque ou semi-remorque directrice selon la revendication 13, dans laquelle ledit dispositif de mise sous pression (45) comprend une alarme de basse pression.

15. Remorque ou semi-remorque directrice selon la revendication 14, dans laquelle chaque vérin de sécurité (40) comprend une paire de pistons (42a, b) coulissant d'une manière limitée dans le plateau respectif entre une position d'arrêt centrale et une position d'arrêt d'extrémité respective et opposée, lesdits pistons (42a, b) étant rigides du point de vue de la translation avec une même tige (43) dans la direction du coulissement de la position d'arrêt centrale à la position d'arrêt d'extrémité et libres par rapport à ladite tige (43) dans la direction opposée.

16. Remorque ou semi-remorque directrice selon une ou plusieurs des revendications précédentes, dans laquelle le vérin de commande (18) est de type à simple tige de passage (20) et à plusieurs plateaux (19a, b).

17. Remorque ou semi-remorque directrice selon la revendication 16, dans laquelle le nombre de plateaux (19a, b) du vérin de commande correspond au nombre d'essieux de direction (3, 4).
